# FASCICULE DE BREVET EUROPEEN

(11) **EP 1 954 461 B1**
(45) Date de publication et mention de la délivrance du brevet: **14.12.2011**
(21) Numéro de dépôt: 06806969.9
(22) Date de dépôt: 04.10.2006
(51) Int. Cl.: B29C 33/00, B29D 30/06, B29C 33/44

(54) **MOULE POUR BANDE DE ROULEMENT DE PNEUMATIQUE**
FORMWERKZEUG FÜR REIFENLAUFFLÄCHE
MOLD FOR A TYRE TREAD

(30) Priorité: 04.10.2005 FR 0510115
(43) Date de publication de la demande: 13.08.2008
(73) Titulaire: Société de Technologie Michelin, 63000 Clermont-Ferrand (FR); Michelin Recherche et Technique S.A., 1463 Granges-Paccot (CH)
(72) Inventeur: DELBET, Cédric, F-63400 Chamalieres (FR); DESVIGNES, Jean-Claude, F-63360 Gerzat (FR); KNEPFLE, Robert, Piedmont, South Carolina 29673 (US)
(74) Mandataire: Dequire, Philippe Jean-Marie Denis
(86) Numéro de dépôt international: PCT/EP2006/067034
(87) Numéro de publication internationale: WO 2007/039623

(56) Documents cités:
- EP-A- 0 348 367
- EP-A- 0 858 875
- EP-A- 1 232 852
- EP-A- 1 275 527
- US-A- 1 733 064
- DATABASE WPI Week 199241 Derwent Publications Ltd., London, GB; AN 1992-337964 XP002389397 -& JP 04 244815 A (SHOWA ELECTRIC WIRE & CABLE) 1 septembre 1992 (1992-09-01)
- PATENT ABSTRACTS OF JAPAN vol. 009, no. 057 (M-363), 13 mars 1985 (1985-03-13) -& JP 59 192541 A (MITSUBISHI JUSHI KK), 31 octobre 1984 (1984-10-31)

## Description

### Domaine de l'invention

La présente invention concerne les moules permettant de mouler des pneumatiques ou des bandes de roulement.

### Définitions

Dans le présent document, les termes « axial » et « axialement » désignent une direction sensiblement parallèle à l'axe de rotation d'un pneumatique, ou, si ces termes sont appliqués à une bande de roulement qui n'est pas encore fixée sur un pneumatique, une direction destinée à être sensiblement parallèle à l'axe de rotation d'un pneumatique lorsque la bande de roulement sera fixée sur le pneumatique. On dira d'un point d'une bande de roulement qu'il est axialement à l'extérieur d'un deuxième point de la même bande de roulement si le premier point est axialement plus éloigné du plan médian de la bande de roulement.

Les termes « radial » et « radialement » désignent ici toute direction perpendiculaire à l'axe de rotation du pneumatique et ayant une intersection avec cet axe, ou, si ces termes sont appliqués à une bande de roulement qui n'est pas encore fixée sur un pneumatique, toute direction destinée à être perpendiculaire à l'axe de rotation du pneumatique et ayant une intersection avec cet axe lorsque la bande de roulement sera fixée sur le pneumatique.

Les termes « circonférentiel » et « circonférentiellement » se réfèrent à une direction qui est perpendiculaire à la fois aux directions axiale et radiale.

Les termes « axial », « radial » et « circonférentiel » s'appliquent aux moules par analogie aux pneumatiques ou bandes de roulement moulés à l'aide de ces moules.

Par « surface de roulement » d'une bande de roulement d'un pneumatique, on entend la surface formée par les points de la bande de roulement qui entrent en contact avec le sol lorsque le pneu roule.

Par « face latérale » d'une bande de roulement d'un pneumatique, on entend toute partie de la surface de la bande de roulement qui s'étend des extrémités axiales de la surface de roulement aux flancs du pneumatique. Lorsqu'on considère une bande de roulement avant qu'elle soit fixée sur un pneumatique, une face latérale est constituée par la partie de la surface de la bande de roulement qui relie un des bords de la surface de roulement à la surface destinée à entrer en contact avec la carcasse du pneumatique.

Par « doigt », on entend tout élément moulant destiné à mouler une cavité dont au moins une partie est située radialement à l'intérieur de la surface de roulement et qui débouche sur au moins une face latérale de la bande de roulement, sans autre limitation géométrique.

« Direction moyenne du doigt » désigne la direction de la plus grande dimension du doigt. Par « section moyenne du doigt » on entend la moyenne des sections du doigt dans des plans perpendiculaires à la direction moyenne du doigt.

Par « canal », on entend une cavité moulée par un doigt.

Par « mélange » ou « mélange de caoutchouc », on entend une composition de caoutchouc comportant au moins un élastomère et une charge.

Le terme « pneumatique » désigne ici tous types de bandages élastiques, gonflés ou non, soumis en service à une pression interne ou non.

### Arrière-plan technologique

Il est connu depuis longtemps que la présence de canaux situés sous la surface de roulement d'un pneumatique et débouchant sur une face latérale de la bande de roulement peut conférer des propriétés intéressantes au pneumatique, notamment lorsqu'il comporte une bande de roulement épaisse. Les canaux rendent la sculpture de la bande de roulement évolutive, car ils apparaissent en surface de la bande de roulement au fur et à mesure de son usure, favorisant ainsi l'adhérence sur sol humide sans pour autant sacrifier la rigidité de la bande de roulement à l'état neuf. De plus, les canaux contribuent au refroidissement des épaules du pneumatique (effet de ventilation) et améliorent par conséquent son endurance. Ces effets hydrodynamique et thermique sont amplifiés lorsque le canal débouche non seulement sur une face latérale de la bande de roulement, mais aussi dans une rainure de la bande de roulement.

La demande de brevet EP 1 232 852 décrit un moule et un procédé de moulage d'une bande de roulement comportant ce type de canal. Le moule comprend des secteurs de couronne mobiles radialement et comportant des nervures destinées à mouler des rainures de pneumatiques, et des secteurs d'épaule mobiles radialement et axialement, parmi lesquels au moins certains portent des doigts destinés à mouler les canaux axiaux. Dans un mode de réalisation préférentiel, ces doigts prennent appui, pendant la pénétration des doigts dans le mélange formant la bande de roulement, sur les nervures, afin de résister à la pression exercée par le mélange à mouler.

Ce procédé de moulage a montré son efficacité ; toutefois, à l'usage, il a été constaté qu'un film de mélange peut se former de façon aléatoire entre la surface du doigt et la nervure sur laquelle ce même doigt prend appui. La formation de ce film est favorisée par les fortes pressions de moulage (de l'ordre de 10 bar) qui amplifient le fluage du mélange dans l'espace dû au jeu entre doigt et nervure. Les dimensions du film résultent, entre autres, des tolérances d'obtention des pièces du moule, des conditions thermiques et d'exploitation, ainsi que de l'usure des pièces du moule. Dans le moule décrit dans la demande de brevet EP 1 232 852, le film n'est pas nécessairement rompu lors du retrait axial du doigt, ni lors du retrait radial du secteur de couronne. Si le film subsiste intégralement ou partiellement, il obture l'orifice reliant le canal à la rainure. En usage, cette obturation réduit ou bloque les flux de liquides ou de gaz entre le canal et la rainure ; par conséquent, la contribution du canal à l'évacuation de l'eau et à l'abaissement de la température de fonctionnement des parties du pneumatique l'entourant, et notamment des épaules du pneumatique, est réduite ou même nulle.

Le même phénomène a été observé dans d'autres moules. Le brevet EP 925 907 décrit un moule à doigts pour mouler une partie d'une bande de roulement d'un pneumatique, ce moule comportant au moins un élément moulant destiné à mouler une rainure dans la bande de roulement, deux des parois principales de la rainure étant pourvues d'au moins un élément de liaison reliant ces parois. L'élément moulant est constitué d'une première et d'une deuxième partie : la première partie constitue le support, la deuxième partie comporte au moins un doigt destiné à être assemblé avec la première partie de façon à former au moins un orifice pour mouler les éléments de liaison reliant les parois principales de la rainure. Le jeu nécessaire à la mise en place des doigts dans le support conduit à la formation de films de mélange. Une partie seulement des films étant rompus au moment des dégagements des doigts, il est proposé de prévoir, dans chaque passage de doigt, et sur chaque doigt, des filetages permettant d'introduire chaque doigt par vissage. Cette disposition permet de réduire de façon sensible la quantité de mélange pouvant pénétrer dans chaque passage. En outre, le mouvement de rotation imposé à chaque doigt pour le dévissage a pour effet de cisailler et donc de rompre les films formés entre chaque doigt et les passages du doigt. Un inconvénient de cette solution consiste en ce qu'elle nécessite des moyens de vissage et de dévissage de chaque doigt et rend le moulage et le démoulage très complexe. Un autre inconvénient de la solution réside dans le fait qu'elle crée des contraintes concernant la géométrie de chaque doigt, car les zones pourvues de filetage sont nécessairement cylindriques.

Le brevet EP 1 275 527 mentionne également la formation de films de mélange entre deux éléments moulants avant la vulcanisation et propose d'équiper les extrémités des éléments moulants de lames tranchantes permettant de désolidariser ces petites quantités de mélange de la bande de roulement au moment même de leur formation.

Les brevets EP 858875 et US 1733064 proposent d'éviter la formation d'un voile mince de gomme en assurant un bon contact entre les éléments moulants complémentaires.

De façon plus générale, dans le domaine du moulage d'objets en caoutchouc et en matière plastique, les brevets JP 4244815, JP 59192541 et EP 348367 décrivent l'utilisation d'un tampon en matériau déformable entre deux éléments moulants complémentaires.

L'invention vise à obtenir un canal situé radialement sous la surface d'une bande de roulement d'un pneumatique et qui débouche à la fois sur une face latérale de la bande de roulement et sur au moins une paroi latérale d'au moins une rainure de la bande de roulement sans être obturé par un film de mélange.Cet objectif est atteint par un moule comme défini dans la revendication 1, pour le moulage d'une bande de roulement en mélange de caoutchouc, cette bande comportant une surface de roulement limitée axialement par des faces latérales, ce moule comprenant :
- une partie centrale pour mouler la surface de roulement, mobile entre une configuration ouverte permettant le chargement du moule et une configuration fermée permettant le moulage, la partie centrale comportant au moins une nervure pour mouler une rainure dans la surface de roulement ;
- deux parties latérales pour mouler les faces latérales, au moins une des parties latérales étant mobile axialement par rapport à la partie centrale ; et
- au moins un doigt pour mouler un canal à l'intérieur de la bande de roulement, ce doigt étant ancré dans l'une des parties latérales ;
et dans lequel, lorsque le moule est fermé, une surface de contact est formée entre le doigt et la nervure et le doigt et/ou la nervure comportent au moins un tampon réalisé dans un matériau déformable dont la déformation permet de combler le jeu entre le doigt et la nervure dans la surface de contact lorsque le moule est fermé. La surface de contact entre le doigt et la nervure comporte une première et une deuxième partie, la première partie étant sensiblement perpendiculaire à la direction radiale et la deuxième partie étant inclinée par rapport à la première partie, et le tampon comble le jeu entre le doigt et la nervure dans la deuxième partie. Des formes avantageuses de l'invention font l'objet des revendications dependantes.

La présence du tampon comporte l'avantage de prévenir toute inclusion d'air entre le doigt et la nervure. De façon générale, la fixation du tampon sur la nervure (plutôt que sur le doigt) comporte l'avantage de moins solliciter le tampon lors du retrait du doigt du pneumatique moulé, ce qui a tendance à augmenter sa durée de vie. L'arrangement particulier de la première partie et de la deuxième partie de la surface de contact entre le doigt et la nervure permet notamment de réduire la sollicitation du tampon déformable lors de la fermeture du moule. A ce moment, l'ensemble formé par le doigt la nervure subit des contraintes radiales qui sont reprises, pour l'essentiel par la première partie de la surface de contact. Le tampon recouvrant la deuxième partie, inclinée par rapport à la direction radiale, n'est pas ou peu sollicité, ce_qui augmente sensiblement sa durée de vie. Ceci est vrai, que le tampon soit solidaire du doigt ou de la nervure

L'expression « moule pour le moulage d'une bande de roulement » doit ici être compris dans un sens large : il peut s'agir d'un moule servant uniquement au moulage de la bande de roulement (par exemple, pour fabriquer des bandes de roulement plates ou rondes, destinées à être fixées sur un pneu neuf ou pour le rechapage) ou alors d'un moule permettant de former une bande de roulement directement sur le pneumatique (comme par exemple un moule de pneumatique traditionnel).

Pour que les canaux puissent pleinement remplir leur fonction, la perte de charge entre chaque canal et la rainure dans laquelle il débouche doit être minimisée. En termes de moulage, cela signifie notamment que la surface de contact entre doigt et nervure doit avoir des dimensions suffisantes par rapport à la section du canal.

Plusieurs critères géométriques peuvent être formulés :

Selon un premier critère, le ratio entre (i) l'aire de la projection de la surface de contact dans un plan perpendiculaire à la direction moyenne du doigt et comprenant le point de la surface de contact axialement le plus à l'extérieur et (ii) la section du doigt dans le même plan est préférentiellement supérieur à 0.5 et encore plus préférentiellement à 0.8.

Selon un deuxième critère, le ratio entre (i) l'aire de la projection de la surface de contact dans un plan perpendiculaire à une direction radiale coupant la surface de contact et (ii) la section du doigt dans un plan perpendiculaire à la direction moyenne du doigt et comprenant le point de la surface de contact axialement le plus à l'extérieur est préférentiellement supérieur à 0.5 et encore plus préférentiellement supérieur à 1.

Selon un troisième critère, le ratio entre (i) l'aire de la projection de la surface de contact dans un plan perpendiculaire à la direction moyenne du doigt et comprenant le point de la surface de contact axialement le plus à l'extérieur et (ii) la section moyenne du doigt, mesurée perpendiculairement à la direction moyenne du doigt, est de préférence supérieur à 0.5 et encore plus préférentiellement supérieur à 0.8.

Selon un quatrième critère, le ratio entre (i) faire de la projection de la surface de contact dans un plan perpendiculaire à une direction radiale coupant la surface de contact et (ii) la section moyenne du doigt, mesurée perpendiculairement à la direction moyenne du doigt, est de préférence supérieur à 0.5 et encore plus préférentiellement supérieur à 1.

Le premier et le deuxième critère permettent une mise en relation de l'aire de la surface de contact (dans sa projection dans la direction du doigt et dans sa projection radiale) et de la section du doigt dans la proximité de la surface de contact ; le troisième et le quatrième critère permettent de mettre en relation cette même aire de la surface de contact avec le diamètre moyen du doigt, ce qui a l'avantage de tenir compte de la dimension moyenne du canal et donc de sa capacité à faire transiter des fluides. Bien entendu, un doigt selon l'invention peut satisfaire plusieurs critères à la fois.

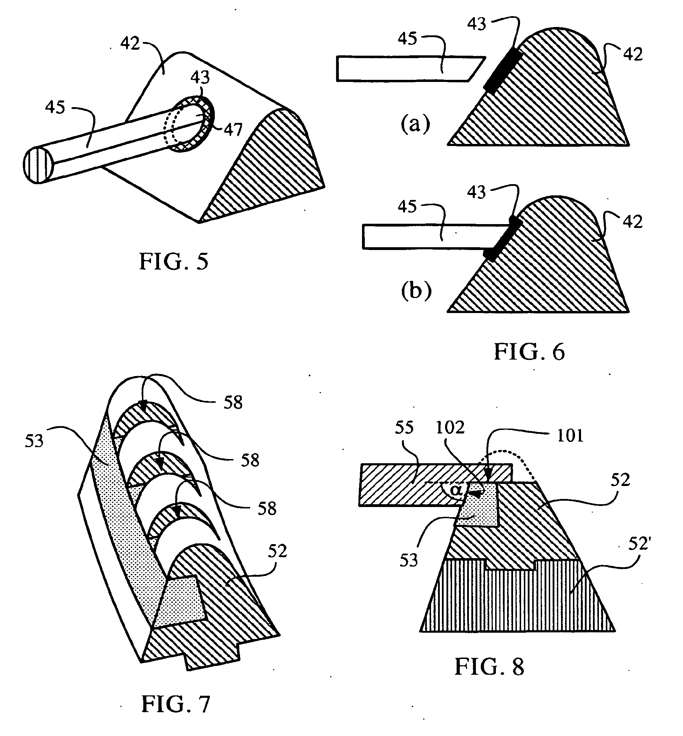

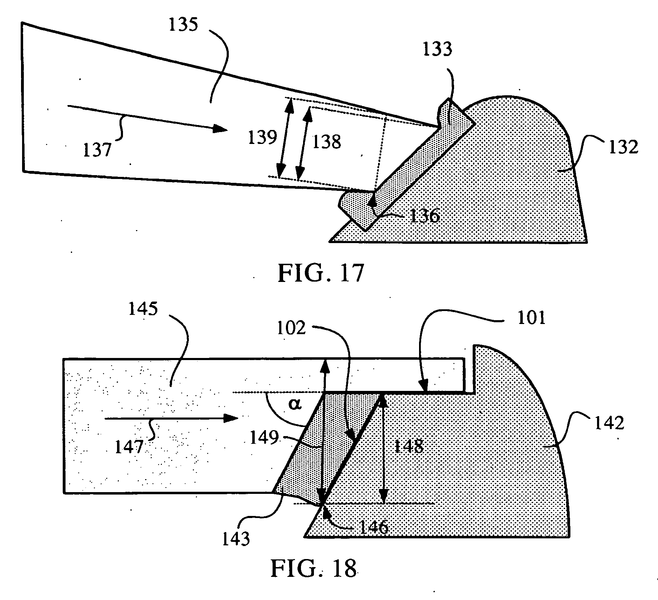

De préférence, la première partie et la deuxième partie de la surface de contact entre le doigt et la nervure sont sensiblement planes, car cela permet d'obtenir un bon contact entre doigt et nervure. L'angle d'inclinaison a entre la première et la deuxième partie de la surface de contact, mesuré dans un plan qui comprend à la fois la direction radiale et la direction moyenne du doigt (voir Fig. 8 et 18), est de préférence supérieur à 45° et encore plus préférentiellement supérieur à 70°.

Selon un premier mode de réalisation préférentiel, le tampon est solidaire de la nervure et réalisé sous la forme d'une bande, par exemple dans une direction sensiblement perpendiculaire à la direction radiale, de sorte à pouvoir servir d'appui pour une pluralité de doigts. Ce mode de réalisation permet de réduire le coût de réalisation du moule, notamment lorsque un grand nombre de doigts sont utilisés. De surcroît, la fixation du tampon sur la nervure permet d'avoir des tampons plus épais, permettant de compenser des défauts d'alignement du doigt plus importants.

Selon un deuxième mode de réalisation préférentiel, le tampon comporte une zone réalisée en matériau déformable et une zone d'accostage en matériau rigide, de préférence métallique, destinée à entrer en contact avec le doigt. Ainsi il est possible d'éviter tout contact direct entre le doigt et le matériau déformable, dans le but de réduire le frottement subi par ce matériau et, par conséquent, augmenter la durée de vie du tampon. De façon préférentielle, le tampon comporte en outre une zone de fixation en matériau rigide, de préférence métallique, destinée à fixer le tampon sur la nervure, par exemple à l'aide d'un filetage. Dans cette configuration, le matériau déformable se trouve en « sandwich » entre la zone de fixation et la zone d'accostage.

Le tampon déformable peut être réalisé dans un matériau plastique (tel que des mousses métalliques) ou élastique (comme par exemple le silicone). Selon un mode de réalisation préférentiel, le tampon déformable est réalisé dans un matériau élastique, car cette caractéristique permet d'éviter la formation d'un jeu entre doigt et nervure même après une multitude d'étapes de moulage. Si la déformation est purement plastique, le tampon ne sera pas en mesure d'assurer la compensation du jeu naissant de l'usure des élément moulants ou dû au montage. Il est donc avantageux d'utiliser des matériaux dont la déformation a une composante élastique. Préférentiellement, on utilisera un matériau à la fois élastique et incompressible, tel que le silicone.

L'invention sera mieux comprise grâce à la description des dessins selon lesquels :
- la figure 1 représente schématiquement une vue partielle en coupe radiale d'un pneumatique ;
- la figure 2 représente schématiquement une vue en perspective partielle d'un moule selon l'invention ;
- les figures 3 et 4 représentent schématiquement une vue partielle en coupe radiale d'un moule selon l'invention et d'un pneumatique après moulage ;
- les figures 5 et 6 représentent schématiquement une vue en perspective et en coupe des extrémités d'un doigt et d'une nervure d'un moule selon l'invention ;
- la figure 7 représente schématiquement une vue en perspective de l'extrémité d'une nervure d'un moule selon l'invention ;
- la figure 8 représente schématiquement une vue en coupe des extrémités d'un doigt et une nervure d'un moule selon l'invention ;
- les figures 9 et 10 représentent schématiquement une vue en coupe éclatée de nervures d'un moule selon l'invention ;
- la figure 11 représente schématiquement une vue en coupe de la nervure de la figure10 et de l'extrémité d'un doigt, avant et après la mise en contact de doigt et nervure ;
- les figures 12 et 13 représentent schématiquement une vue en perspective de l'extrémité d'un doigt sans et avec un tampon déformable ;
- les figures 14 et 15 représentent schématiquement une vue en coupe de l'extrémité d'un doigt pourvu d'une zone déformable ;
- la figure 16 représente schématiquement un doigt pourvu d'une zone déformable et une partie de l'élément moulant une rainure contre lequel le doigt s'appuie ;
- les figures 17 et 18 représentent schématiquement une vue en coupe des extrémités d'un doigt et d'une nervure d'un moule selon l'invention ;
- les figures 19 à 21 représentent schématiquement une partie d'une bande de roulement comportant un canal débouchant dans une rainure
- la figure 22 illustre schématiquement le troisième critère géométrique à appliquer dans la conception d'un moule selon l'invention.

Ces figures sont données dans un but purement illustratif et n'ont bien sur aucun caractère limitatif.

### Description de modes de réalisation

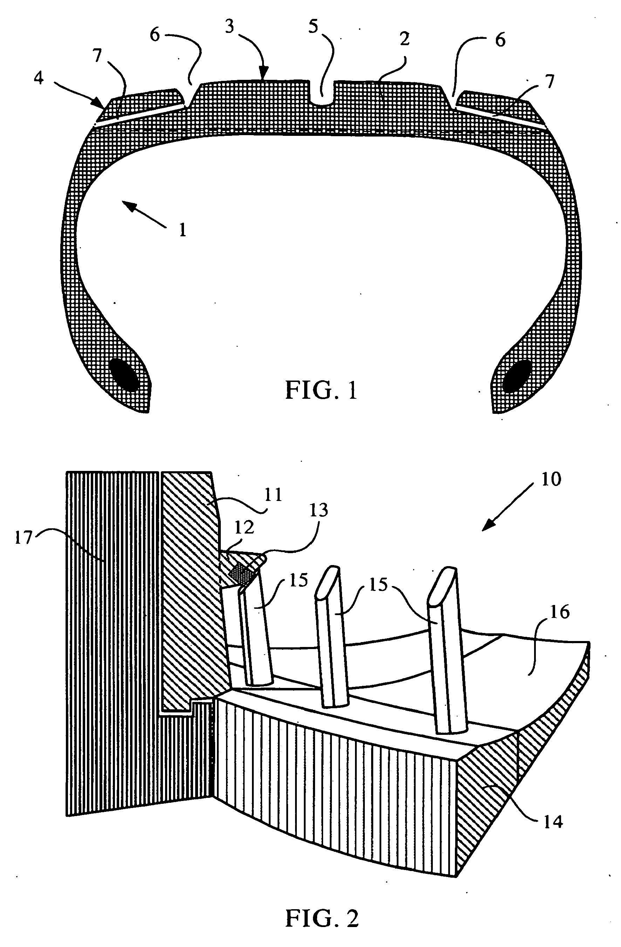

La figure 1 représente schématiquement une vue partielle en coupe radiale d'un pneumatique 1 pourvu d'une bande de roulement 2 comprenant une surface de roulement 3 limitée axialement par des faces latérales 4. La bande de roulement a une rainure centrale 5; sur la coupe apparaissent également d'autres rainures 6. Ces rainures 6 sont reliées aux faces latérales 4 par le moyen de canaux 7.

La figure 2 représente schématiquement une vue en perspective partielle d'un moule 10 selon l'invention permettant d'obtenir un pneumatique 1 pourvu de canaux 7 débouchant à la fois sur une face latérale 4 de la bande de roulement 2 et sur au moins une paroi latérale d'au moins une rainure 6 de la bande de roulement 2 sans être obturé par un film de mélange.

On aperçoit la partie centrale 11 destinée à mouler la surface de roulement 3 pourvue d'une nervure 12 comportant un tampon déformable 13. Est également représentée une partie latérale 14 destinée à mouler la face latérale 4 de la bande de roulement 2. Les doigts 15 sont solidaires de cette partie latérale 14. La figure 2 représente le moule 10 dans sa configuration fermée ; chacun des doigts 15 est en contact avec une nervure 12 (par souci de clarté, une seule de ces nervures est représentée), à travers le tampon 13 réalisé dans un matériau déformable ; la pression exercée sur le tampon 13 amène celui-ci à se déformer, ce qui permet de combler le jeu entre le doigt 15 et la nervure 12 dans la surface de contact. Par conséquent, le mélange ne peut s'introduire dans l'espace entre le doigt 15 et la nervure 12 lors du moulage, ce qui a pour effet d'éviter la formation d'un film obstruant partiellement ou totalement le canal 7 (figure 1). Dans un souci de clarté, une partie de la coquille 16 prévue pour mouler les flancs du pneumatique 1 ainsi que l'une des parties renforçantes 17 du moule 10 sont également représentées.

Signalons que le contact entre doigt et nervure n'est pas forcément parfait, dans la mesure où les surfaces en contact peuvent comporter des rugosités, à condition que leur taille soit suffisamment petite pour ne pas permettre l'intrusion de mélange entre doigt et nervure (du fait de la tension de surface du mélange). Si, par exemple, on utilise un doigt dont l'extrémité est formée d'une multiplicité de petits picots, la surface de contact au sens strict est constituée par une multiplicité de points. Dans les critères géométriques mentionnés plus haut, il convient alors de considérer, non pas cette surface de contact au sens strict, mais la surface délimitée par la surface enveloppante l'ensemble des points de contact. De préférence, on utilisera cependant des surfaces suffisamment planes pour limiter autant que possible l'inclusion d'air entre doigt et nervure.

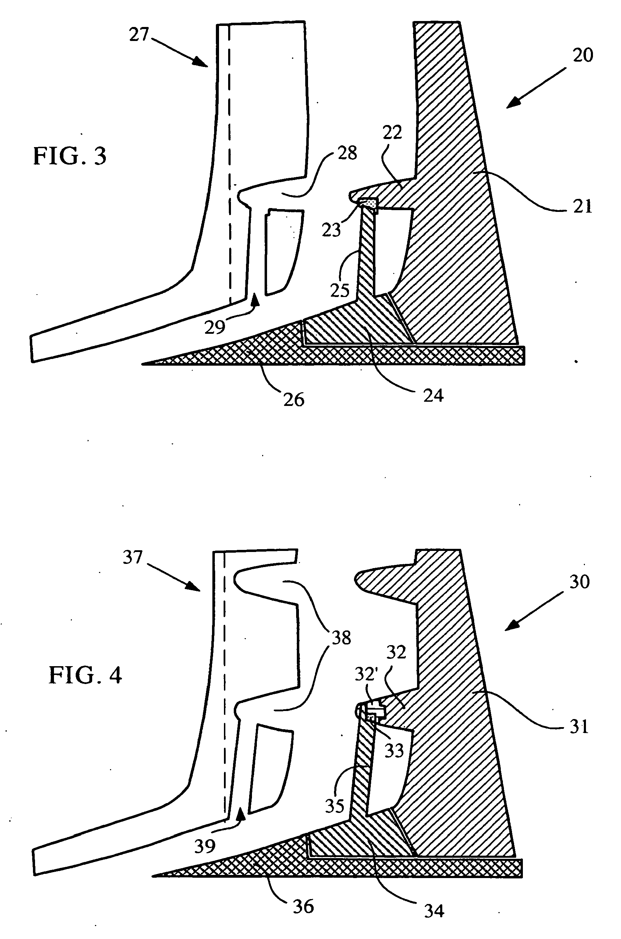

La figure 3 représente schématiquement une vue partielle en coupe radiale d'un moule 20 selon l'invention ainsi que d'un pneumatique 27 moulé à l'aide de ce moule 20. Le moule 20 est semblable au moule 10 en ce que la nervure 22 dont la partie centrale 21 est pourvue comporte un tampon 23 réalisé dans un matériau déformable. Le doigt 25 qui est solidaire de la partie latérale 24 appuie contre le tampon 23 lorsque le moule 20 est fermé. La coquille 26 destinée à mouler le flanc du pneumatique 27 est également partiellement représentée. La zone de transition entre le canal 29 moulé par le doigt 25 et la rainure 28 moulée par la nervure 22 est libre de tout film de mélange ; le moule 20 selon l'invention permet d'éviter tout risque de formation d'un tel film obstruant le canal 29.

La figure 4 représente schématiquement une vue partielle en coupe radiale d'un autre moule 30 selon l'invention. La partie centrale 31 se distingue de la partie centrale 21 du moule 20 en ce qu'elle comporte deux nervures destinés à mouler deux rainures 38 distinctes dans la bande de roulement du pneumatique 37. Le doigt 35 qui est solidaire de la partie latérale 34 est légèrement incliné par rapport à la direction axiale, ce qui a pour effet que le canal 39 moulé par le doigt 35 est également incliné. De nouveau, la zone de transition entre le canal 39 et la rainure 38 dans laquelle il débouche est libre de tout film obstruant le canal 39.

La structure des nervures 22 et 32 est illustrée de façon plus détaillée dans les figures 5 à 8. La pièce 32' est notamment montrée en détail à la figure7.

La figure 5 représente une vue en perspective d'un doigt 45 et d'une nervure 42 d'un moule selon l'invention. La configuration représentée correspond au moule fermé ; le doigt 45 appuie contre le tampon 43 que comporte la nervure 42 et écrase ainsi le tampon 43 qui est déformable. Dans l'exemple représenté, la surface de contact 47 entre le doigt 45 et le tampon 43 est inférieure à la surface totale que présente le tampon 43.

La figure 6 représente la même configuration en coupe, avant (figure 6(a)), et après (figure 6(b)) la fermeture complète du moule. On voit clairement la déformation subie par le tampon 43 lorsque le doigt 45 est mis en place lors de la fermeture du moule.

La figure 7 représente schématiquement une vue en perspective de l'extrémité d'une autre nervure 52 d'un moule selon l'invention. La partie représentée de la nervure 52 peut accueillir trois doigts qui se logent dans les créneaux 58 lorsque le moule est fermé. Le tampon 53 est réalisé sous la forme d'une bande unique, mise en place de façon continue sur la nervure 52 et servant d'appui pour les trois doigts. L'avantage de ce mode de réalisation consiste dans le fait que le tampon déformable 53 est continu ; en effet, il n'est pas nécessaire de prévoir et de positionner un tampon par doigt. Compte tenu de l'encombrement intrinsèque assez volumineux d'un tampon tel que celui de la figure 6, le mode de réalisation correspondant à la figure 7 est particulièrement adapté à des cas où les canaux 7 (figure 1) sont très rapprochés les uns des autres.

La figure 8 représente la même configuration en coupe. Le positionnement d'un doigt 55 sur la nervure, correspondant au moule fermé, est suggéré. Il y apparaît d'ailleurs que l'élément 52 ne correspond en réalité qu'à l'extrémité de la nervure, destinée à être montée sur la base 52'. La séparation des éléments 52 et 52' permet un remplacement facile et rapide du tampon 53, par exemple lorsqu'il est usé ou autrement endommagé (coupures ...). L'angle d'inclinaison a entre la première partie 101 et la deuxième partie 102 de la surface de contact entre le doigt 55 et la nervure 52 est ici égal à 80°.

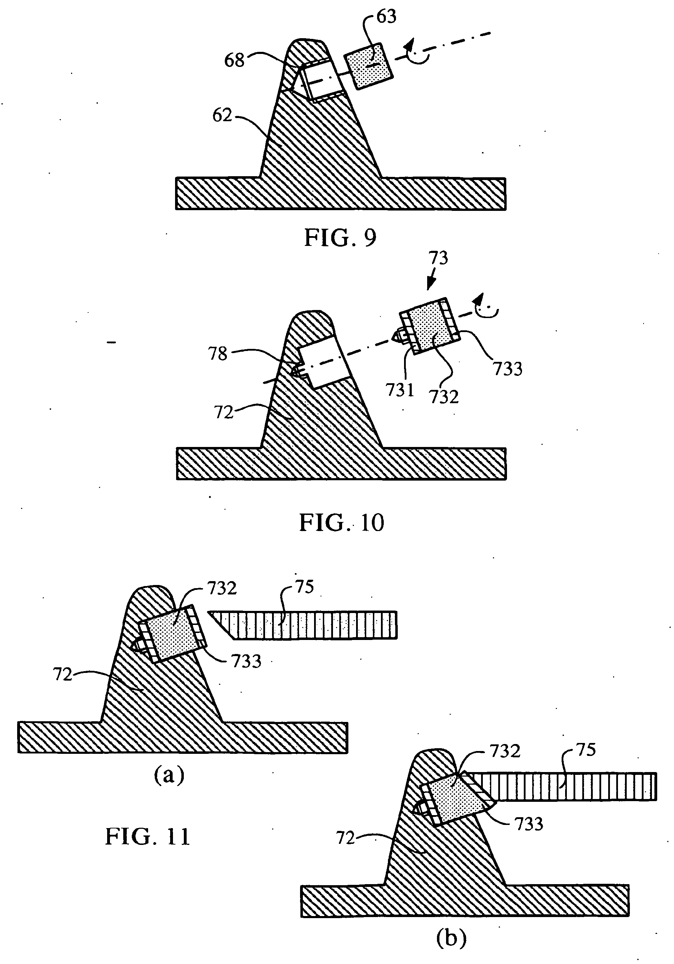

La figure 9 représente une vue en coupe éclatée d'une nervure 62 d'un moule selon l'invention. Cette nervure 62 est caractérisée par le fait que le tampon 63 est vissé sur la nervure à l'aide d'un taraudage 68 réalisé dans la nervure 62. Par exemple, il est possible de visser une corde en silicone dont le diamètre est adapté au taraudage (typiquement entre 6 et 12 mm) dans le taraudage et de couper la corde en laissant une faible surépaisseur. Ce mode de réalisation se distingue par la grande simplicité de mise en oeuvre et par le fait que des tampons de rechange peuvent être fabriqués à très bas coût. Un autre avantage réside dans le fait qu'il est possible d'effectuer des changements unitaires (tampon par tampon) sans devoir démonter le moule.

La figure 10 représente une vue en coupe éclatée d'une autre nervure 78 d'un moule selon l'invention. Contrairement au mode de réalisation de la figure 9, le tampon 73 comporte une zone de fixation 731 comprenant un axe fileté, une zone déformable 732 et éventuellement une zone d'accostage 733 métallique qui va réceptionner l'extrémité du doigt. Il est fixé dans la nervure 72 à l'aide d'un taraudage 78 dont le diamètre est bien entendu plus petit que le taraudage 68 de la figure 9 (par exemple, 3 mm au lieu de 10 mm). Il est possible de prévoir une empreinte hexagonale creuse dans la zone d'accostage 733 de façon à pouvoir visser le tampon 73 dans la nervure 72 à l'aide d'une clé pour vis à six pans creux. L'avantage conféré par une zone d'accostage 733 métallique réside dans la pérennisation du contact étanche entre doigt et nervure, étant donné que certains matériaux de tampon (comme le silicone) ne résistent pas très bien aux frottements répétés.

La figure 11 montre une vue en coupe de la nervure 72 de la figure 10 lorsque le tampon 73 y est vissé. La figure 11(a) montre une situation où le moule n'est pas encore totalement fermé ; le doigt 75 n'est pas encore entré en contact avec le tampon 73 de la nervure 72. Dans la figure 11(b), le moule est fermé et le doigt 75 est en contact avec la zone d'accostage 733 du tampon 73. Sous la pression exercée par le doigt 75, la zone déformable 732 se déforme de façon à ce que la zone d'accostage 733 s'aligne par rapport à la surface que lui présente le doigt 75, ce qui permet un contact étanche et empêche la formation d'un film de mélange entre le doigt 75 et le tampon 73.

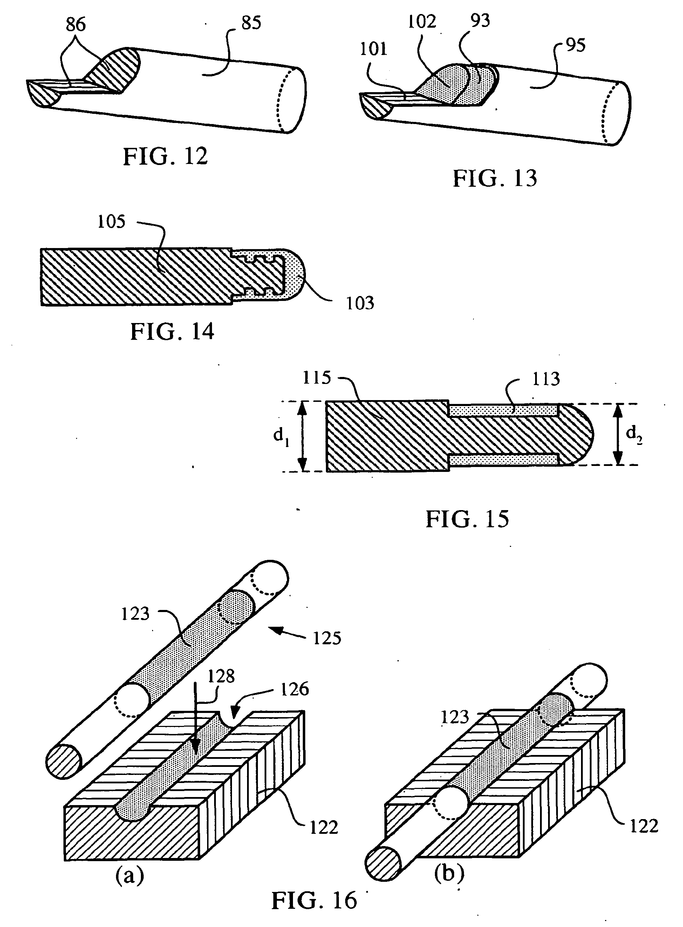

Tous les modes de réalisation représentés dans les figures 1 à 11 correspondent à des solutions au problème technique selon lesquelles la nervure comporte un tampon déformable. Il est également possible de solidariser la partie déformable, non pas avec la nervure mais avec l'extrémité des doigts, comme cela est illustré dans les figures 13 à 15.

La figure 12 représente une vue en perspective de l'extrémité d'un doigt 85 adapté à l'utilisation avec une nervure tel que la nervure 52 de la figure 7. Les surfaces 86 destinées à entrer en contact avec la nervure sont réalisées dans le matériau rigide du doigt 85, en l'occurrence en acier ; il est bien évidemment possible d'utiliser d'autres matériaux rigides, tels que certains alliages de l'acier.

La figure 13 représente un doigt 95 de géométrie semblable à celle du doigt 85, mais pourvu d'un tampon déformable 93. Ce doigt 95 peut donc être utilisé avec une nervure dépourvue de zone déformable. Une partie 101 de la surface de contact entre le doigt 95 et la nervure correspondante n'est pas recouverte de matériau déformable, ce qui lui permet de reprendre les efforts exercés dans la direction perpendiculaire à cette partie 101 (donc sensiblement radiale) et d'éviter que le tampon 93 et le corps du doigt ne subissent une déformation élastique trop importante, ce qui augmenterait le risque d'endommagement. L'angle d'inclinaison α entre la première partie 101 et la deuxième partie 102 de la surface de contact entre le doigt 95 et la nervure (non représentée) est ici égal à 60°.

La figure 14 représente un autre type de doigt 105 comportant la zone tampon 103 à son extrémité. L'utilisation d'un tel doigt peut être avantageuse, notamment lorsqu'on cherche à réduire l'encombrement. Dans ce type de doigt, le tampon 103 assure l'étanchéité de la surface de contact et reprend des efforts. La zone de la nervure dans laquelle le doigt est accueilli possède une forme aménagée, mais il n'y a généralement pas de tampon déformable au niveau de la nervure.

La figure 15 représente un autre doigt 115 selon l'invention, comportant une zone de tampon 113. Cette variante consiste à mettre en place un tube déformable 113, par exemple en élastomère, autour de la partie métallique du doigt 115. Ainsi tubé, le doigt 115 (qui est donc un doigt composite) a une capacité à se déformer suffisante pour assurer un contact étanche entre le doigt 1 15 et la nervure correspondante une fois que le moule est fermé et l'accostage réalisé. Il convient de s'assurer que le diamètre d₂ du tube 113 est inférieur au diamètre d₁ du doigt 115, de sorte à prévenir tout « détubage » intempestif lors du retrait du doigt pendant la phase de démoulage du pneumatique ou de la bande de roulement (à l'occasion du recul et/ou du basculement de la partie centrale par rapport à la partie latérale ; *cf*. la cinématique décrite dans le document EP 1 232 852).

La figure 16 représente un doigt 125 du même type que le doigt 115 de la figure précédente ainsi qu'une partie de la nervure 122 avec laquelle le doigt 125 est en contact lorsque le moule est fermé. La figure 16(a) montre le doigt 125 et la nervure 122 avant la fermeture du moule ; lors de la fermeture, le doigt 125 et la nervure 122 se rapprochent selon la direction indiquée par la flèche 128 jusqu'à ce que le doigt se loge dans l'évidement 126 prévu sur la nervure 122 (figure 16(b)). Le tampon déformable 123 est dimensionné de façon à couvrir la totalité de la surface de contact entre le doigt 125 et la nervure 122. Ainsi la déformation du tampon 123 permet d'éviter l'infiltration d'air et l'intrusion de mélange de caoutchouc entre le doigt 125 et la nervure 122.

Les figures 17 et 18 servent à illustrer le premier critère géométrique applicable dans la conception d'un moule selon l'invention. La figure 17 représente une nervure 132 comprenant un tampon 133 contre lequel un doigt 135 de géométrie conique exerce une pression. La direction moyenne 137 du doigt est indiquée à l'aide d'une flèche. La longueur de la trace de la projection de la surface de contact entre le doigt 135 et la nervure 132 comportant le tampon 133 dans un plan perpendiculaire à la direction moyenne 137 du doigt et comprenant le point de la surface de contact axialement le plus à l'extérieur 136 est indiquée par la double flèche 138. La longueur de la trace de la section du doigt 135 dans le même plan est indiquée par la double flèche 139. En l'occurrence, le ratio entre (i) l'aire de la projection de la surface de contact entre le doigt 135 et la nervure 132 dans un plan perpendiculaire à la direction moyenne 137 du doigt et comprenant le point de la surface de contact axialement le plus à l'extérieur 136 et (ii) la section du doigt 135 dans le même plan est égal à 0.9.

On voit très bien dans cette figure que pour ce type de doigt, le ratio est différent de 1 uniquement parce que le doigt a une certaine conicité : si le doigt avait une géométrie cylindrique, l'aire de la projection de la surface de contact entre le doigt et la nervure dans un plan perpendiculaire à la direction moyenne du doigt et comprenant le point de la surface de contact axialement le plus à l'extérieur et la section du doigt 135 dans le même plan coïncideraient.

La figure 18 représente une nervure 142 contre laquelle un doigt 145 (qui est du même type que le doigt 95 de la figure 13) exerce une pression. Le doigt 145 comprend un tampon 143 dont la déformation est visible. La direction moyenne 147 du doigt est indiquée à l'aide d'une flèche. La longueur de la trace de la projection de la surface de contact entre le doigt 145 et la nervure 142 dans un plan perpendiculaire à la direction moyenne 147 du doigt et comprenant le point de la surface de contact axialement le plus à l'extérieur 146 est indiquée par la double flèche 148. La longueur de la trace de la section du doigt 145 dans le même plan est indiquée par la double flèche 149. En l'occurrence, le ratio entre (i) l'aire de la projection de la surface de contact entre le doigt 145 et la nervure 142 dans un plan perpendiculaire à la direction moyenne 147 du doigt et comprenant le point de la surface de contact axialement le plus à l'extérieur 146 et (ii) la section du doigt 145 dans le même plan est égal à 0.75. L'angle d'inclinaison a entre la première partie 101 et la deuxième partie 102 de la surface de contact entre le doigt 145 et la nervure 142 est ici égal à 70°.

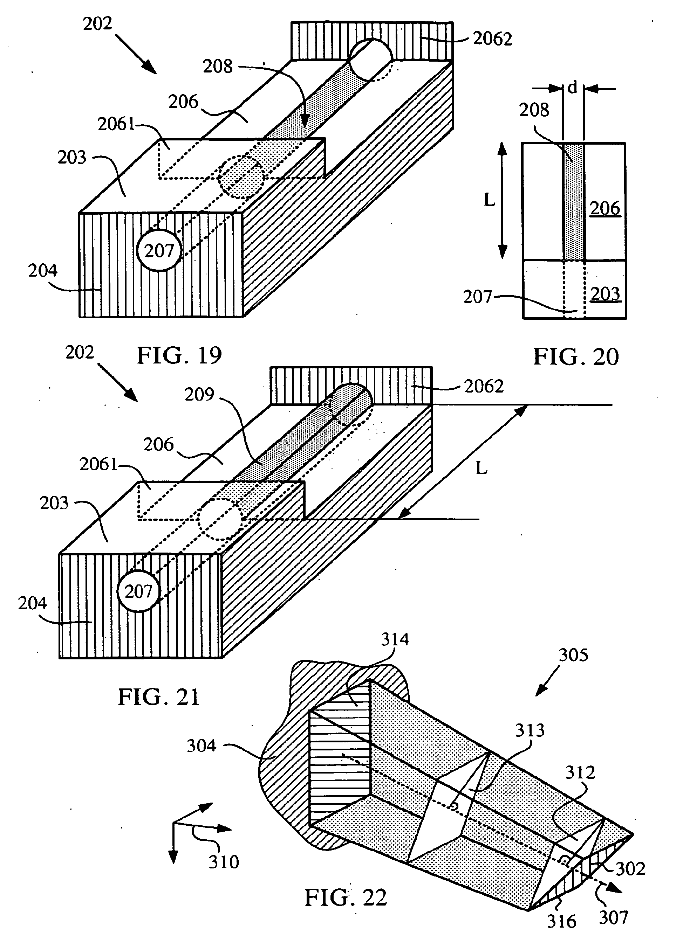

Les figures 19 à 21 représentent schématiquement une partie d'une bande de roulement comportant un canal débouchant dans une rainure ; elles servent notamment à illustrer le deuxième critère géométrique applicable dans la conception d'un moule selon l'invention.

La figure 19 montre schématiquement une partie d'une bande de roulement 202 obtenue après moulage avec un doigt et une nervure tels que représentés dans la figure 16. On y voit une rainure 206 délimitée par des parois 2061 et 2062 et un canal 207 formé sous la surface de roulement 203, entre une face latérale 204 de la bande de roulement 202 et la rainure 206. Dans l'exemple représenté, qui n'est aucunement limitatif, le canal s'étend même au-delà de la rainure 206. Comme le doigt utilisé dépasse la nervure correspondante dans le sens radial (voir figure 16(b)), la rainure 206 comporte un évidement 208.

La figure 20 montre la même partie d'une bande de roulement 202 dans une projection dans un plan perpendiculaire à une direction radiale coupant la surface de contact.

L'exemple représenté correspond au résultat obtenu avec un doigt cylindrique d'un diamètre « d » de 10 mm ; le plan perpendiculaire à la direction moyenne du doigt (ou, ce qui revient au même, du canal 207) et comprenant le point de la surface de contact entre le doigt et la nervure qui est situé axialement le plus à l'extérieur coïncide ici avec le plan qui comprend la paroi 2061 ; la section du doigt dans ce plan est donc égale à (d/2)² π = 78.5 mm². Si la largeur « L » de la rainure (voir figure 21) est également de 10 mm, l'aire de la projection de la surface de contact entre le doigt et la nervure dans un plan perpendiculaire à une direction radiale coupant la surface de contact est sensiblement égale à d*L = 100 mm². Le ratio entre (i) l'aire de la projection de la surface de contact dans un plan perpendiculaire à une direction radiale coupant la surface de contact et la section du doigt dans un plan perpendiculaire à la direction moyenne du doigt et comprenant le point de la surface de contact axialement le plus à l'extérieur est ici égal à 1.27. Signalons que le même ratio serait obtenu en appliquant le quatrième critère géométrique, car la section du doigt est constante et égale à (d/2)² π = 78.5 mm².

La figure 21 représente schématiquement une partie d'une bande de roulement 202 obtenue après moulage avec un doigt et une nervure tels que représentés dans la figure 16, mais dépourvus de tampon déformable. Une certaine quantité de mélange s'étant infiltrée dans le jeu entre le doigt et la nervure, un film de mélange 209 s'est formé, obstruant ainsi le passage entre le canal 207 et la rainure 206. Dans le cas extrême représenté ici, l'obstruction est totale, car il n'y a pas eu de contact direct entre le doigt et la nervure. Dans des situations réelles, la surface de contact entre un doigt non déformable et une nervure non déformable est en général non nulle, mais petite par rapport à la section du doigt. L'équipement du doigt (ou de la nervure) avec un tampon déformable selon l'invention permet donc de significativement augmenter la surface de contact et de minimiser ainsi l'obstruction du canal reliant la face latérale de la bande de roulement et une rainure dans la surface de roulement.

La figure 22 illustre schématiquement le troisième critère géométrique applicable dans la conception d'un moule selon l'invention. Il s'agit d'une vue en perspective de la configuration que l'on rencontre avec un doigt 305 de section rectangulaire qui est incliné par rapport à la direction axiale (correspondant à l'axe 310). La partie latérale du moule est indiquée par la référence 304, son intersection avec le doigt par la référence 314 et la surface de contact entre le doigt 305 et la nervure (non représentée) par la référence 302. La section moyenne 313 du doigt 305, mesurée perpendiculairement à la direction moyenne 307 du doigt 305 est représentée à l'endroit où la section du doigt 305 correspond à la section moyenne. Dans le cas d'espèce représenté, le ratio entre (i) l'aire de la projection 312 de la surface de contact 302 entre le doigt 305 et la nervure dans un plan perpendiculaire à la direction moyenne 307 du doigt 305 et comprenant le point de la surface de contact axialement le plus à l'extérieur (ici : tous les points de la ligne 316 qui correspond au bord inférieur de la surface de contact 302) et (ii) la section moyenne 313 du doigt 305, mesurée perpendiculairement à la direction moyenne 307 du doigt 305, est égal à 0.6.

## Revendications

1. Moule (10) pour le moulage d'une bande de roulement (2) en mélange de caoutchouc, cette bande (2) comportant une surface de roulement (3) limitée axialement par des faces latérales (4), ce moule comprenant :
- une partie centrale (11 ; 21 ; 31) pour mouler la surface de roulement, mobile entre une configuration ouverte permettant le chargement du moule et une configuration fermée permettant le moulage, la partie centrale comportant au moins une nervure (12 ; 22 ; 32 ; 42 ; 52 ; 62 ; 72 ; 122 ; 132 ; 142) pour mouler une rainure (6 ; 28 ; 38 ; 206) dans ta surface de roulement ;
- deux parties latérales (14 ; 24 ; 34) pour mouler les faces latérales, au moins une des parties latérales étant mobile axialement par rapport à la partie centrale ; et
- au moins un doigt (15 ; 25 ; 35 ; 45 ; 55 ; 75 ; 85 ; 95 ; 105 ; 115 ; 125 ; 135 ; 145 ; 305) pour mouler un canal (7 ; 29 ; 39) à l'intérieur de la bande de roulement, ce doigt étant ancré dans l'une des parties latérales ;
**caractérisé en ce que**, lorsque le moule est fermé, une surface de contact est formée entre le doigt et la nervure, et le doigt et/ou la nervure comportent au moins un tampon (13 ; 23 ; 33 ; 43 ; 53 ; 63 ; 73 ; 93 ; 103 ; 113 ; 123 ; 133 ; 143) réalisé dans un matériau déformable dont la déformation permet de combler le jeu entre le doigt et la nervure dans la surface de contact lorsque le moule est fermé, et **en ce que** ladite surface de contact comporte une première partie (101) et une deuxième partie (102), la première partie étant sensiblement perpendiculaire à la direction radiale et la deuxième partie étant inclinée par rapport à la première partie, et dans lequel le tampon comble le jeu entre le doigt et la nervure dans la deuxième partie.

2. Moule selon la revendication 1, dans lequel le tampon est solidaire du doigt.

3. Moule selon la revendication 1, dans lequel le tampon est solidaire de la nervure.

4. Moule selon la revendication 3, dans lequel le tampon est réalisé sous la forme d'une bande (53), de sorte à pouvoir servir d'appui pour une pluralité de doigts.

5. Moule selon la revendication 4, dans lequel la bande (53) s'étend dans une direction sensiblement perpendiculaire à la direction radiale.

6. Moule selon la revendication 1, dans lequel le tampon comporte une zone déformable (732) et une zone d'accostage (733) destinée à entrer en contact avec le doigt, la zone d'accostage étant réalisée en matériau rigide.

7. Moule selon la revendication 6, dans lequel le tampon comporte en outre une zone de fixation (731) pour fixer le tampon sur la nervure.

8. Moule (10) selon l'une quelconque des revendications précédentes, **caractérisé en ce que** ledit tampon est réalisé dans un matériau élastique et incompressible.

9. Moule (10) selon la revendication 8, **caractérisé en ce que** ledit tampon est réalisé en silicone.

## Claims

1. A mould (10) for moulding a tread (2) of rubber mix, this tread (2) comprising a rolling surface (3) delimited axially by lateral faces (4), this mould comprising:
- a central part (11; 21; 31) for moulding the rolling surface, movable between an open configuration allowing filling of the mould and a closed configuration allowing moulding, the central part comprising at least one rib (12; 22; 32; 42; 52; 62; 72; 122; 132; 142) for moulding a groove (6; 28; 38; 206) in the rolling surface;
- two lateral parts (14; 24; 34) for moulding the lateral faces, at least one of the lateral parts being axially movable relative to the central part; and
- at least one pin (15; 25; 35; 45; 55; 75; 85; 95; 105; 115; 125; 135; 145; 305) for moulding a channel (7; 29; 39) inside the tread, this pin being anchored in one of the lateral parts;
**characterised in that**, when the mould is closed, a contact surface is formed between the pin and the rib, and the pin and/or the rib comprise at least one buffer (13; 23; 33; 43; 53; 63; 73; 93; 103; 113; 123; 133; 143) made of a deformable material, deformation of which makes it possible to fill in the clearance between the pin and the rib at the contact surface when the mould is closed, and **in that** said contact surface comprises a first part (101) and a second part (102), the first part being substantially perpendicular to the radial direction and the second part being inclined with respect to the first part, and wherein the buffer fills the clearance between the pin and the rib in said second part of the contact surface.

2. A mould according to claim 1, wherein the buffer is integral with the pin.

3. A mould according to claim 1, wherein the buffer is integral with the rib.

4. A mould according to claim 3, wherein the buffer has the shape of a strip (53) serving as a support for a plurality of pins.

5. A mould according to claim 4, wherein the strip (53) extends in a direction that is substantially perpendicular to the radial direction.

6. A mould according to claim 1, wherein the buffer comprises a deformable zone (732) and a docking zone (733) which is intended to come in contact with the pin and which is made of rigid material.

7. A mould according to claim 6, wherein the buffer further comprises a fixing zone (731) for fixing the buffer on the rib.

8. A mould (10) according to any one of the preceding claims, **characterised in that** said buffer is made of an elastic, incompressible material.

9. A mould (10) according to claim 8, **characterised in that** said buffer is made of silicone.

## Patentansprüche

1. Formwerkzeug (10) zum Formen eines Laufstreifens (2) aus einer Kautschukmischung, wobei dieser Streifen (2) eine Lauffläche (3) aufweist, die axiale durch Seitenflächen (4) begrenzt wird, wobei dieses Formwerkzeug enthält:
- einen zentralen Bereich (11; 21; 31) zum Formen der Lauffläche, der zwischen einer offenen Konfiguration, die das Beladen des Formwerkzeugs erlaubt, und einer geschlossenen Konfiguration beweglich ist, die das Formen erlaubt, wobei der zentrale Bereich mindestens eine Rippe (12; 22; 32; 42; 52; 62; 72; 122; 132; 142) aufweist, um eine Rille (6; 28; 38; 206) in der Lauffläche zu formen;
- zwei seitliche Bereiche (14; 24; 34), um die Seitenflächen zu formen, wobei mindestens einer der seitlichen Bereiche bezüglich des zentralen Bereichs axial beweglich ist; und
- mindestens einen Finger (15; 25; 35; 45; 55; 75; 85; 95; 105; 115; 125; 135; 145; 305), um einen Kanal (7; 29; 39) im Inneren des Laufstreifens zu formen, wobei dieser Finger in einem der seitlichen Bereiche verankert ist;
**dadurch gekennzeichnet, dass**, wenn das Formwerkzeug geschlossen ist, eine Kontaktfläche zwischen dem Finger und der Rippe geformt wird, und der Finger und/oder die Rippe mindestens einen Puffer (13; 23; 33; 43; 53; 63; 73; 93; 103; 113; 123; 133; 143) aufweisen, der aus einem verformbaren Material hergestellt ist, dessen Verformung es ermöglicht, den Zwischenraum zwischen dem Finger und der Rippe in der Kontaktfläche zu füllen, wenn das Formwerkzeug geschlossen ist, und dass die Kontaktfläche einen ersten Bereich (101) und einen zweiten Bereich (102) aufweist, wobei der erste Bereich im Wesentlichen lotrecht zur radialen Richtung und der zweite Bereich bezüglich des ersten Bereichs geneigt ist, und wobei der Puffer den Zwischenraum zwischen dem Finger und der Rippe im zweiten Bereich füllt.

2. Formwerkzeug nach Anspruch 1, bei dem der Puffer fest mit dem Finger verbunden ist.

3. Formwerkzeug nach Anspruch 1, bei dem der Puffer fest mit der Rippe verbunden ist.

4. Formwerkzeug nach Anspruch 3, bei dem der Puffer in Form eines Streifens (53) hergestellt ist, um als Auflage für eine Vielzahl von Fingern dienen zu können.

5. Formwerkzeug nach Anspruch 4, bei dem der Streifen (53) sich in einer Richtung im Wesentlichen lotrecht zur radialen Richtung erstreckt.

6. Formwerkzeug nach Anspruch 1, bei dem der Puffer eine verformbare Zone (732) und eine Anlegezone (733) aufweist, die dazu bestimmt ist, mit dem Finger in Kontakt zu kommen, wobei die Anlegezone aus steifem Material hergestellt ist.

7. Formwerkzeug nach Anspruch 6, bei dem der Puffer außerdem eine Befestigungszone (731) aufweist, um den Puffer an der Rippe zu befestigen.

8. Formwerkzeug (10) nach einem der vorhergehenden Ansprüche, **dadurch gekennzeichnet, dass** der Puffer aus einem elastischen und nicht komprimierbaren Material hergestellt ist.

9. Formwerkzeug (10) nach Anspruch 8, **dadurch gekennzeichnet, dass** der Puffer aus Silicon hergestellt ist.
